# FASCICULE DE BREVET EUROPEEN

(11) **EP 1 485 857 B1**
(45) Date de publication et mention de la délivrance du brevet: **09.08.2006**
(21) Numéro de dépôt: 02804606.8
(22) Date de dépôt: 11.12.2002
(51) Int. Cl.: G06K 7/00, G06K 19/07

(54) **COMPOSANT ELECTRONIQUE NUMERIQUE PROTEGE CONTRE DES ANALYSES DE TYPE ELECTRIQUE**
DIGITALE ELEKTRONISCHE KOMPONENTE, DIE VOR ANALYSEN DES ELEKTRISCHEN TYPS GESCHÜTZT IST
DIGITAL ELECTRONIC COMPONENT WHICH IS PROTECTED AGAINST ELECTRICAL-TYPE ANALYSES

(30) Priorité: 13.12.2001 FR 0116114
(43) Date de publication de la demande: 15.12.2004
(73) Titulaire: Canal + Technologies, 75015 Paris (FR)
(72) Inventeur: DAUVOIS, Jean-Luc, F-75116 Paris (FR); PERRINE, Jérôme, F-92100 Boulogne (FR)
(74) Mandataire: Weihs, Bruno Konrad
(86) Numéro de dépôt international: PCT/FR2002/004285
(87) Numéro de publication internationale: WO 2003/050750

(56) Documents cités:
- EP-A- 0 482 975
- EP-A- 0 772 058
- WO-A-97/17667

## Description

### DOMAINE TECHNIQUE

La présente invention concerne un composant électronique numérique protégé contre des analyses de type électrique et/ou électromagnétique, notamment dans le domaine de la carte à puce.

### ETAT DE LA TECHNIQUE ANTERIEURE

Le domaine de l'invention est celui de la mise en oeuvre dans un composant électronique numérique, par exemple une carte à puce, de mécanismes pour lutter contre des extractions de données (en général à clé de chiffrement) par une analyse de la consommation en courant, ou par une analyse du rayonnement électromagnétique émis. Généralement ces analyses sont nommées SPA ("Simple Power Analysis") /DPA ("Differential Power Analysis") ou SEMA ("Simple Electrical Magnetic Analysis")/DEMA ("Differential Electrical Magnetic Analysis")

A l'aide de ces analyses on arrive à déterminer ce que fait l'unité centrale d'une carte à puce, quelles sont les données manipulées par celle-ci. On peut ainsi avoir accès à la (ou les) clef(s) secrète(s) utilisée(s) pour la transmission de ces données. Une telle intrusion se fait sans aucun risque, car il ne sera pas possible de prouver, ultérieurement, qu'elle a eu lieu, puisque le composant est resté intègre.

Comme décrit dans l'article de Paul Kocher, Joshua Jaffe et Benjamin Jun intitulé "Introduction to differential power analysis and related attack" (site Internet : www.cryptography.com, Cryptography Research, 1998), ces techniques d'analyse peuvent avoir des conséquences importantes, puisqu'elles permettent d'extraire des clés secrètes utilisées pour des communications cryptées. De plus, de telles attaques peuvent être montées rapidement et être mises en oeuvre en utilisant du matériel facilement disponible. La quantité de temps requise pour réaliser celles-ci dépend du type de l'attaque (DPA, SPA) et varie en fonction du composant considéré. Une attaque SPA peut prendre quelques secondes par composant alors qu'une attaque DPA peut prendre plusieurs heures.

Aujourd'hui, les électroniques numériques sont peu ou pas protégés contre de telles analyses électriques ou électromagnétiques. Deux familles de protection existent : l'une est purement informatique (ou "software"), l'autre est purement matérielle (ou "hardware"). Dans le cas de données manipulées par l'unité centrale d'une carte à puce :
- dans la première famille, une solution technique consiste à rendre la consommation du courant aussi aléatoire que possible, cette consommation en courant étant le moins possible liée avec les données manipulées par l'unité centrale. On peut ainsi rendre aléatoire le déroulement des instructions, ou rendre aussi aléatoire que possible les données manipulées.
- dans la seconde famille on peut :
   - soit rendre le courant aussi uniforme que possible de manière à ce qu'il soit très difficile de réaliser une correspondance entre la consommation en courant et les instructions manipulées par l'unité centrale,
   - soit rendre aléatoire la consommation en courant de manière à désynchroniser deux fonctionnements identiques de l'unité centrale.

C'est dans ce deuxième cas que se situe l'invention.

Une demande de brevet européen EP 1 113 386 décrit une solution pour protéger une carte à puce contre de telles attaques. Dans cette solution, deux condensateurs sont encastrés dans la carte à puce de telle manière qu'à n'importe quel moment l'un d'eux soit chargé par une alimentation d'énergie externe et l'autre soit déchargé en actionnant le composant de la carte à puce. Les rôles des deux condensateurs alternent rapidement et l'alimentation d'énergie est isolée du composant de la carte à puce dans le sens que des analyses de la consommation en courant ne donnent pas d'informations sur le fonctionnement de ce composant.

L'objectif de l'invention est de résoudre le problème exposé ci-dessus, en faisant varier de manière aléatoire la vitesse de fonctionnement d'un composant électronique numérique considéré, par exemple une carte à puce, de manière à rendre des analyses SPA/DPA et/ou SEMA/DEMA difficiles, voire impossibles.

### EXPOSÉ DE L'INVENTION

L'invention a pour objet un composant électronique numérique protégé contre des analyses de type électrique et/ou électromagnétique comprenant un élément synchrone piloté par une horloge, caractérisé en ce qu'il comprend des moyens de génération de cette horloge dont la fréquence varie de manière aléatoire entre une valeur minimum et une valeur maximum pendant au moins une période de temps donnée, et des moyens de contrôle du caractère aléatoire du changement de fréquence de l'horloge.

Ces moyens de génération d'une horloge peuvent comprendre un générateur de consigne de fréquence aléatoire commandant un générateur de fréquence.

Le générateur de fréquence peut comprendre au moins deux synthétiseurs de fréquence, ou circuits PLL ("Phase Locked Loop"), et des moyens de commutation entre ces synthétiseurs, ou circuits.

L'élément synchrone peut être l'unité centrale d'une carte à puce, une mémoire, ou une fonction câblée synchrone, par exemple de type FPGA ("Field Programmable Gate Arrays") ou ASIC ("Application Specific Integrated Circuit").

La plage de variation de fréquences doit être la plus large possible pour perturber au maximum des analyses de type DPA/SPA et DEMA/SEMA. L'aléa considéré est un vrai aléa, car il ne s'agit pas ici d'une dérive en phase ou en fréquence de l'horloge, mais d'un changement de fréquence aléatoire piloté. En perturbant ainsi l'horloge on rend aléatoire la consommation en courant de l'élément synchrone.

### BRÈVE DESCRIPTION DES DESSINS

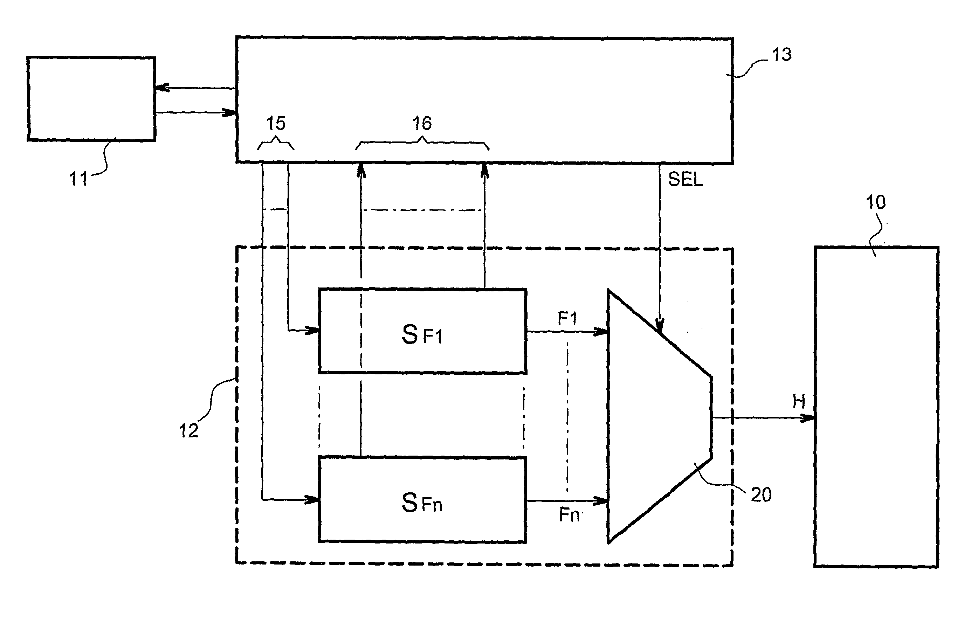

La figure unique illustre un composant électronique numérique protégé contre des attaques de type électrique et/ou électromagnétique selon l'invention.

### EXPOSÉ DÉTAILLÉ DE MODES DE RÉALISATION PARTICULIERS

Comme illustré sur la figure le composant électronique numérique protégé contre des attaques de type électrique et/ou électromagnétique selon l'invention, par exemple d'une carte à puce, comprend :
- une unité centrale 10 de cette carte à puce,
- un générateur d'une consigne de fréquence aléatoire 11,
- un générateur de fréquence 12 piloté par ce générateur 10, qui fournit à cette unité centrale 10 une horloge H, dont la fréquence varie de manière aléatoire entre une valeur minimum et une valeur maximum,
- un contrôleur 13 qui a pour objet de mesurer la fréquence de l'horloge H et de vérifier le fonctionnement réellement aléatoire du changement de fréquence.

L'excursion en fréquence de l'horloge H, qui est la plus grande possible, est comprise entre 1 MHz et 100 MHz.

Dans l'exemple de réalisation illustré sur la figure, le générateur de fréquence 12 comprend au moins deux synthétiseurs de fréquence SF1... SFn commandés par des signaux provenant des sorties 15 du contrôleur 13, et un circuit 20 de multiplexage et de synchronisation recevant les sorties F1...Fn de ces synthétiseurs SF1...SFn.

Lors d'un changement de fréquence, avant de sélectionner l'une des fréquences à la sortie des synthétiseurs SF1...SFn en envoyant un signal SEL sur le circuit 20 de multiplexage et de synchronisation, le contrôleur 13 vérifie qu'il n'y a pas de perturbations possibles en analysant les signaux reçus sur ses entrées 16.

Le contrôleur 13 peut ainsi fonctionner de la manière suivante :
- demande, au générateur d'une consigne de fréquence aléatoire 11, d'une nouvelle valeur,
- valeur fournie par ce générateur 11 au contrôleur 13,
- vérification par le contrôleur 13 du caractère aléatoire de cette valeur par rapport aux valeurs précédentes,
- envoi de cette valeur aux synthétiseurs SF1...SFn.

L'invention permet de rendre aléatoire le fonctionnement de l'unité centrale, qui réalise les calculs, et de donner une apparence de consommation aléatoire de courant. Des analyses SPA/DPA et/ou SEMA/DEMA sont difficiles voire impossibles à mener car elles nécessitent une augmentation importante du nombre d'analyses de courant.

L'invention permet de ne pas modifier l'unité centrale en elle-même, ce qui permet de la faire fonctionner dans sa gamme de fréquences propre.

La qualité de l'invention à se protéger est dépendante du générateur de consigne de fréquence aléatoire et du cycle de changement de fréquence en fonction de la durée d'un cycle d'instruction de l'unité centrale.

Dans un mode de réalisation avantageux, le contrôleur peut être piloté par l'unité centrale.

Dans une variante de fonctionnement on peut n'activer le changement aléatoire de la fréquence de l'horloge H selon l'invention que pendant une période de temps donnée dans des cas considérés comme critiques.

## Revendications

1. Composant électronique numérique protégé contre des analyses de type électrique et électromagnétique comprenant un élément synchrone (10) piloté par une horloge (H), **caractérisé en ce qu'**il comprend un générateur de consigne de fréquence aléatoire (11) commandant un générateur de fréquence (12) qui fournit cette horloge (H) dont la fréquence varie de manière aléatoire entre une valeur minimum et une valeur maximum pendant au moins une période de temps donnée, et des moyens (13) de contrôle du caractère aléatoire du changement de fréquence de cette horloge (H).

2. Composant selon la revendication 1, dans lequel le générateur de fréquence comprend au moins deux synthétiseurs de fréquence (SF1,...SFn) et des moyens de commutation (20).

3. Composant selon la revendication 1, dans lequel le générateur de fréquence comprend au moins deux circuits PLL et des moyens de commutation.

4. Composant selon la revendication 1, dans lequel l'élément synchrone est l'unité centrale (10) d'une carte à puce.

5. Composant selon la revendication 4, dans lequel le contrôleur (13) est piloté par l'unité centrale.

6. Composant selon la revendication 1, dans lequel l'élément synchrone (10) est une mémoire.

7. Composant selon la revendication 1, dans lequel l'élément synchrone (10) est une fonction câblée synchrone.

8. Composant selon la revendication 1, dans lequel l'excursion en fréquence de l'horloge (H) est comprise entre 1 MHz et 100 MHz.

## Claims

1. A digital electronic component which is protected against electrical and electromagnetic type analyses comprising a synchronous element (10) driven by a clock (H), **characterized in that** the component comprises a random frequency instruction generator (11) controlling a frequency generator (12) that provides this clock (H) whose frequency varies randomly between a minimum value and a maximum value during at least one given time period, and means (13) for controlling the random character of the frequency change of this clock (H).

2. The component according to claim 1, in which the frequency generator comprises at least two frequency synthesizers (SF1,...SFn) and switching means (20).

3. The component according to claim 1, in which the frequency generator comprises at least two PLL circuits and switching means.

4. The component according to claim 1, in which the synchronous element is the central unit (10) of a chip card.

5. The component according to claim 4, in which the controller (13) is driven by the central unit.

6. The component according to claim 1, in which the synchronous element (10) is a memory.

7. The component according to claim 1, in which the synchronous element (10) is a cabled synchronous function.

8. The component according to claim 1, in which the frequency excursion of the clock (H) is between 1 MHz and 100 MHz.

## Patentansprüche

1. Digitales elektronisches Bauelement, das gegen elektrische und elektromagnetische Analysen geschützt ist, umfassend ein durch einen Zeitgeber (H) gesteuertes synchrones Element (10), **dadurch gekennzeichnet, dass** es einen Zufallsfrequenzsollwert-Generator (11) umfasst, der einen Frequenzgenerator (12) steuert, der diesen Zeitgeber (H) liefert, dessen Frequenz sich zwischen einem Minimumwert und einem Maximumwert während mindestens eines gegebenen Zeitraums zufällig ändert, sowie Mittel (13) zur Prüfung des zufälligen Charakters der Frequenzänderung dieses Zeitgebers (H).

2. Bauelement nach Anspruch 1, bei dem der Frequenzgenerator mindestens zwei Frequenzsynthetisatoren (SF1,...SFn) und Schaltmittel (20) umfasst.

3. Bauelement nach Anspruch 1, bei dem der Frequenzgenerator mindestens zwei PLL-Schaltungen und Schaltmittel umfasst.

4. Bauelement nach Anspruch 1, bei dem das synchrone Element die Zentraleinheit (10) einer Chipkarte ist.

5. Bauelement nach Ansnpruch 4, bei dem das Prüforgan (13) durch die Zentraleinheit gesteuert wird.

6. Bauelement nach Anspruch 1, bei dem das synchrone Element (10) ein Speicher ist.

7. Bauelement nach Anspruch 1, bei dem das synchrone Element (10) eine verdrahtete synchrone Funktion ist.

8. Bauelement nach Anspruch 1, bei dem der Frequenzhub des Zeitgebers (H) zwischen 1 MHz und 100 MHz beträgt.
